# EUROPEAN PATENT SPECIFICATION

(11) **EP 0 728 115 B1**
(45) Date of publication and mention of the grant of the patent: **20.05.1998**
(21) Application number: 95903009.9
(22) Date of filing: 11.11.1994
(51) Int. Cl.: B65G 63/00, G05D 1/02, B66C 19/00

(54) **METHOD FOR TRANSPORTING A CONTAINER AND TRANSPORTING MEANS FOR PERFORMING THE METHOD**
VERFAHREN ZUM TRANSPORT EINES CONTAINERS UND FÖRDERVORRICHTUNG DAFÜR
PROCEDE DE TRANSPORT D'UN CONTENEUR ET DISPOSITIF DE TRANSPORT POUR SA MISE EN OEUVRE

(30) Priority: 16.11.1993 NL 9301982
(43) Date of publication of application: 28.08.1996
(73) Proprietor: Lubbers, Robert Marie, 2902 GP Capelle a/d IJssel (NL)
(72) Inventor: Lubbers, Robert Marie, 2902 GP Capelle a/d IJssel (NL)
(74) Representative: Prins, Hendrik Willem
(86) International application number: PCT/NL94/00284
(87) International publication number: WO 95/13978

(56) References cited:
- DE-A- 4 005 538
- US-A- 3 958 106

## Description

The invention relates to a method for transporting a container from a starting station to one of a plurality of final destinations, whether or not via one or more intermediate destinations, wherein the container is provided with data identifying the container, which data can be read for processing the container.

The existing method for transporting a container from a starting station to one of a number of final destinations, whether or not via one or more intermediate destinations, takes place particularly when a container ship is being unloaded by gripping, displacing and setting down a container. In United States patent US 3958106 is an article identifying system disclosed especially adapted for identifying coded containers comprising a code reading scanner mounted on a vertical carrier positioned alongside the path of movement of the article. The vertical carrier forms for instance a part of a transport crane or a lifting vehicle in which a "spreader" is suspended for gripping and moving the container. The system as disclosed has the disadvantage that the reliability of the data exchange is limited. The reason therefore is that it is in special cases not possible to read the data from a passing container. This can for instance be the situation when there is a source of disturbance in the neighbourhood or when there is an object between the container and the data reader. Limited reliability also exists when the container passes the data reader on a too large or a too small distance. This can for instance happen when the container is moved too low or too high in respect to the vertical carrier carrying the code reading scanner. Another source for disturbance can be the short time in which the code reading scanner should identify the coded container. When the first scan does not result in a satisfying scan there is not always enough time for a new scan.

The present invention has for its object to provide an improved method for transporting containers from a starting station to one of a plurality of final destinations, whether or not via one or more intermediate destinations, and a transporting means suitable for performing this method. The improvement is focused on preventing scan errors.

The invention provides for this purpose a method in accordance with claim 1. The invention further provides transporting means comprising a data reader and a data processing unit for performing the described method. The advantage of this method is that the data reader and the data carrier are placed in a fixed, standardized position to each other during a relative long time. This restricts the chances of an impropriate data scan drastically and when a first data scan does not give the required results there is enough time for at least on other scan.

The German Offenlegungsschrift DE-4005538 discloses a method and device for automation of transport and transfer of transport containers by data exchange between an external centre and transport containers. The centre is therefore provided of a transmit and receive device and also the transport containers are provided with a transfer and receive device with a memory for storage of relevant transport data. Both the centre and the transport containers in this device are provided with intelligent, interactive data communicating means, so both the centre and the transport containers need to be provided with an energy supply. The centre in this device is suspended to a portal of a crane through which porch a laser beam is directed over a road to exchange data with a transport container on a truck passing through a portal. The reliability of data exchange with this device is questionable, e.g. when two trucks are passing the porch at the same time or when a person stands between the centre and the transport container. The same problem can also arise when the container passes the centre at a too large or too small distance as well as when a container passes a centre too high or too low. Also in this device the time for data exchange is relatively short. Another important disadvantage of this device is that the system is expensive because all the containers in this system need to be provided with a transmit and receive device including a power supply. This device and power supply need to be shock and wheather prove as the containers are dealt with very rough.

The method is preferably characterized in that the data is arranged on the containers at a standardized position. Reading of the data is in this way simplified.

The invention also relates to transporting means suitable for performing the method as claimed above, comprising container gripping means, control means to control the movements of the gripping means and a data reader connected to a data processing unit for reading and processing data from containers, characterized in that the data reader is attached to the gripping means. The data reader can be a barcode reader for a magnetic coat reader. With this device the advantages as described above can be realised on a very cost effective way. Another advantage is that the relative fragile part of the transporting means, this is the data reader, is not mounted on the containers itself.

The present invention will be further elucidated with reference to the annexed figures which show non-limitative embodiments. In the drawing:
fig. 1 shows a perspective view of a container ship moored at quayside; and
fig. 2 shows a perspective view of a spreader and container.

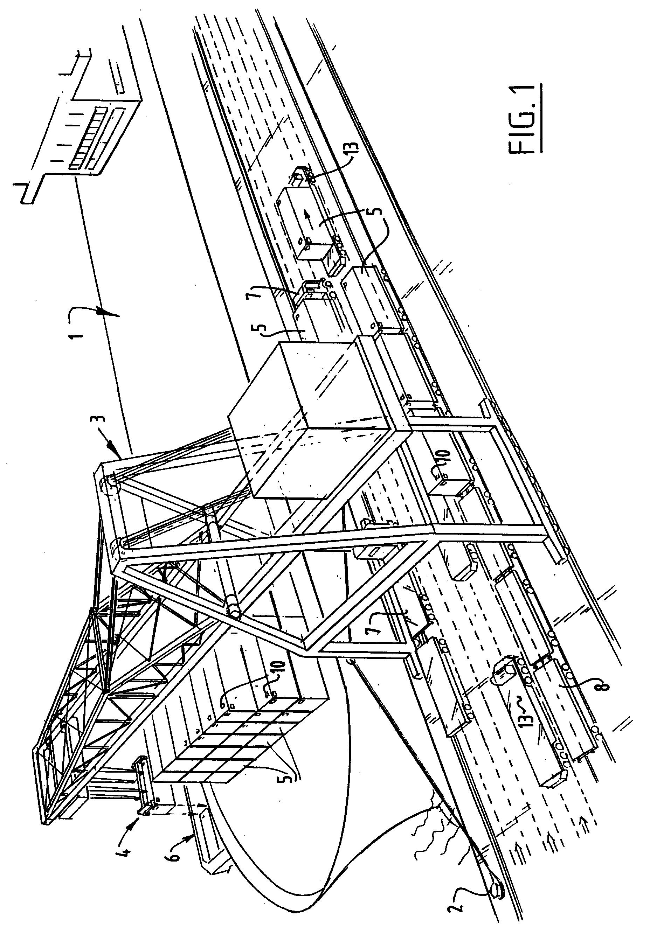

Fig. 1 shows a container ship 1 moored at a quay 2 on which stands a crane 3. The crane 3 comprises a displaceable spreader 4 for gripping and moving containers 5. Particularly in the case of transshipment of the containers 5 from the container ship 1 to another means of transport it is important to know the desired destination and the mode of carriage for the subsequent transport to be used for container 5, since there exist many different destinations for a container 5. It is thus possible to place the container 5 on another ship 6 (for instance a barge or coaster), an articulated truck 7, a train 8 or an unmanned vehicle. Because the data arranged on a container 5 is read immediately the container 5 is gripped with the spreader 4, it is possible to determine the destination of the gripped container 5. The data arranged can also be used during further transport of container 5 to determine or check the destination thereof.

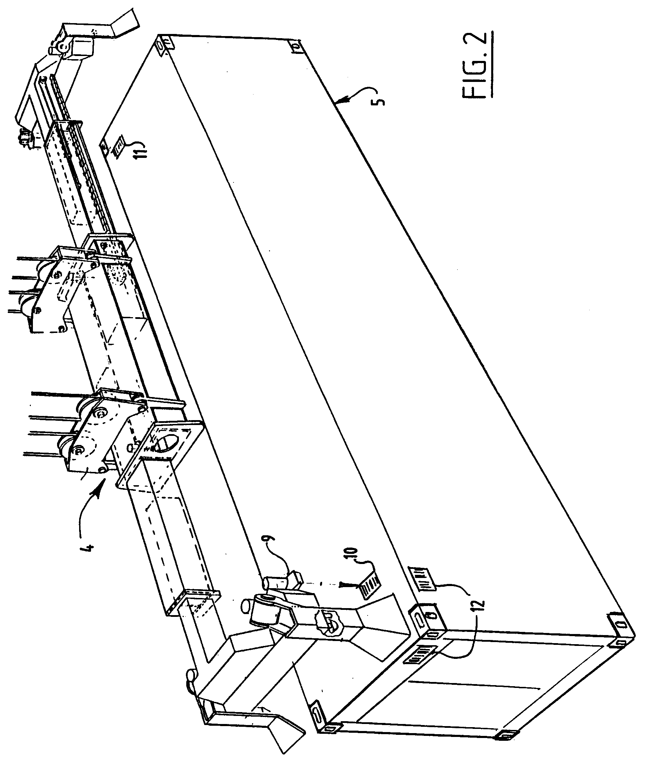

Fig. 2 shows in detail a container 5 and a spreader 4. The latter is provided with a data reader 9 with which the data 10 arranged at a standardized position on container 5 can be read. This data can be arranged on container 5 for instance in the form of a sticker. Because the same data 11 is arranged in the corner diagonally opposite the corner in which the data 10 is arranged it is not important how the spreader 4 grips the container 5 from above; the data 10, 11 can always be read. Other sides of container 5 can also be provided with data 12 corresponding with the above mentioned data 10, 11. Due to this data 12 arranged on the sides of container 5 it is possible to move a container for instance with a side spreader and meanwhile read the data 12. The data 10, 11, 12 can for instance also be used to control an unmanned vehicle 13 as shown in fig. 1 on which the container 5 is placed. It is possible to envisage here a wagon displaceable along a guiding wherein readers are arranged at standardized distance from the guiding for the purpose of reading the data 10, 11, 12.

## Claims

1. A method for transporting a container from a starting station to one of a plurality of final destinations, whether or not via one or more intermediate destinations, wherein the container is provided with data identifying the container, which data can be read for processing the container, **characterized in that** by gripping the container a data reader on container gripping means is placed in the standardized position relative to a data carrier on the container, so that the data reader on the gripping means can read the data carrier.

2. Method as claimed in claim 1, **characterized in that** the data defines a predetermined route and means of transport.

3. Method as claimed in claim 1 or 2, **characterized in that** the data is arranged on the containers at a standardized position.

4. Transporting means suitable for performing the method as claimed as any of the claims 1-3, comprising container gripping means, control means to control the movements of the gripping means and a data reader connected to a data processing unit for reading and processing data from containers, **characterized in that** the data reader is attached to the gripping means.

5. Transporting means as claimed in claim 4, **characterized in that** the data reader is a barcode reader.

6. Transporting means as claimed in claim 4 or 5, **characterized in that** the data reader is a magnetic coat reader.

## Patentansprüche

1. Verfahren zum Transportieren eines Containers von einer Startstation zu einer Mehrzahl von Endbestimmungen, ob oder ob nicht über eine oder mehrere Zwischenbestimmungen, wobei der Container mit Daten versehen ist, die den Container identifizieren, und die Daten zum Bearbeiten des Containers gelesen werden können,
dadurch gekennzeichnet, daß durch Greifen des Containers ein Datenleser auf einem Containergreifmittel an einer standardisierten Position relativ zu einem Datenträger auf dem Container plaziert wird, so daß der Datenleser auf dem Greifmittel den Datenträger lesen kann.

2. Verfahren nach Anspruch 1,
dadurch gekennzeichnet, daß die Daten eine vorbestimmte Route und ein Transportmittel definieren.

3. Verfahren nach Anspruch 1 oder 2,
dadurch gekennzeichnet, daß die Daten auf dem Container an einer standardisierten Position angeordnet sind.

4. Transportmittel, das geeignet zum Ausführen des Verfahrens ist, wie es in einem der Ansprüche 1 bis 3 beansprucht ist, mit einem Containergreifmittel, einem Steuermittel zum Steuern der Bewegung des Greifmittels und einem mit einer Datenverabeitungseinheit verbundenen Datenleser zum Lesen und Verarbeiten von Daten von Containern, dadurch gekennzeichnet, daß der Datenleser an dem Greifmittel angebracht ist.

5. Transportmittel nach Anspruch 4,
dadurch gekennzeichnet, daß der Datenleser ein Barcodeleser ist.

6. Transportmittel nach Anspruch 4 oder 5,
dadurch gekennzeichnet, daß der Datenleser ein Magnetschichtleser ist.

## Revendications

1. Procédé pour transporter un conteneur depuis une station de départ jusqu'à l'une de plusieurs destinations finales, par l'intermédiaire ou non d'une ou plusieurs destinations intermédiaires, dans lequel le conteneur est muni de données identifiant le conteneur, ces données pouvant être lues pour utiliser le conteneur, caractérisé en ce que, en accrochant le conteneur, un lecteur de données sur les moyens d'accrochage du conteneur est placé dans la position standard par rapport à un porteur de données sur le conteneur, si bien que le lecteur de données sur les moyens d'accrochage peut lire le porteur de données.

2. Procédé selon la revendication 1, caractérisé en ce que les données définissent un chemin prédéterminé et des moyens de transport.

3. Procédé selon la revendication 1 ou 2, caractérisé en ce que les données sont agencées sur les conteneurs à des positions standards.

4. Moyen de transport adapté pour la mise en oeuvre du procédé selon l'une quelconque des revendications précédentes 1 à 3, comprenant des moyens d'accrochage de conteneur, des moyens de commande pour commander les mouvements des moyens d'accrochage et un lecteur de données relié à une unité de traitement de données pour lire et traiter les données provenant des conteneurs, caractérisé en ce que le lecteur de données est monté sur les moyens d'accrochage.

5. Moyen de transport selon la revendication 4, caractérisé en ce que le lecteur de données est un lecteur de code à barres.

6. Moyen de transport selon la revendication 4 ou 5, caractérisé en ce que le lecteur de données est un lecteur de couche magnétique.
